# EUROPÄISCHE PATENTANMELDUNG

(11) **EP 0 949 109 A2**
(43) Veröffentlichungstag der Anmeldung: **13.10.1999**
(21) Anmeldenummer: 99105062.6
(22) Anmeldetag: 23.03.1999
(51) Int. Cl.: B60K 35/00

(54) **Anzeigeeinrichtung in Kraftfahrzeugen zur digitalen oder analogen Anzeige von betriebsbezogenen Daten**

(30) Priorität: 09.04.1998 DE 19816018
(71) Anmelder: Volkswagen Aktiengesellschaft, 38436 Wolfsburg (DE)
(72) Erfinder: König, Horst, 38554 Weyhausen (DE)

(57) **Zusammenfassung**

Die Erfindung betrifft eine Anzeigeneinrichtung in Kraftfahrzeugen zur digitalen oder analogen Anzeige von betriebsbezogenen Daten mit mindestens einer Anzeige und einer durchsichtigen Anzeigenabdeckung gemäß Oberbegriff des Patentanspruches 1. Um bei einer Anzeigeneinrichtung der gattungsgemäßen Art zu erreichen, daß dieselbe auf unterschiedliche Fahrzeugführer adaptiert werden kann und darüber hinaus nicht weiter stört, wird erfindungsgemäß vorgeschlagen, daß die durchsichtige Anzeigenabdeckung (3) mindestens eine hinsichtlich der Brennweite einstellbare Linse (2) enthält.

## Beschreibung

Die Erfindung betrifft eine Anzeigeeinrichtung in Kraftfahrzeugen zur digitalen oder analogen Anzeige von betriebsbezogenen Daten mit mindestens einer Anzeige und einer durchsichtigen Anzeigenabdeckung gem. Oberbegriff des Patentanspruches 1.

Der guten Ablesbarkeit von Anzeigeeinrichtungen oder anders gesagt von Instrumenten in Kraftfahrzeugen fällt eine besondere Bedeutung zu. Zum einen müssen die Anzeigen bzw. die Instrumente gut sichtbar und entsprechend ausgeleuchtet sein, zum anderen müssen sie auch deutlich ablesbar sein.

Durch eine entsprechende Neigung der Anzeigen- bzw. Istrumententafel werden beispielsweise sogenannte paralaktische Fehler vermieden, weil die Anzeigfläche lotrecht in die Blickrichtung des Fahrzeugführers geneigt wird.

Ferner gilt auch besonderer Bedeutung der blendfreien Anordnung und Gestaltung der Anzeigen- bzw. Instrumententafeln.

Darüber hinaus ist jedoch zu berücksichtigen, daß eine nicht geringe Anzahl von Personen also Kraftfahrzeugführern unter einer ausgeprägten Weitsichtigkeit leiden. Diese fällt beim Betrieb des Fahrzeuges, wenn es um die Einsichtnahme nach vorne durch die Windschutzscheibe geht nicht weiter ins Gewicht, da die betreffenden Personen Gegenstände in Distanz normalsichtig wahrnehmen. Das heißt für den Blick in die Ferne benötigen sie in der Regel keine Sehhilfe oder -korrektur in Form einer Brille. Hinzu kommt, daß Personen, die unter einer Weitsichtigkeit leiden das Fahrzeug nicht mit einer Lesebrille führen können, weil diese ja wieder die Sehschärfe in der Entfernung einschränkt.

Diese Problematik ist bereits in der DE 296 11 138 U 1 behandelt. Hierzu wird auf der Armaturenscheibe eine Lupe beispielsweise mit Saugnoppen oder mit lösbaren Klebestreifen befestigt. Diese Lupe soll dem weitsichtigen Kraftfahrzeugführer das Ablesen der Anzeigen auf kurzer Entfernung erleichtern.

Von Nachteil ist hierbei, daß die Sichtigkeit einer jeden einzelnen Person unterschiedlich ist. Dies macht notwendig, daß solche Linsen in entsprechender Weise mit unterschiedlichen Brennweiten hergestellt werden müssen.

Im übrigen ist das Anhaften von Sichthilfen auf der Amaturenscheibe bzw. der Anzeigenabdeckung nicht unproblematisch im Betrieb des Fahrzeuges. Sie können sich lösen und stören erheblich den konzentrierten Ablauf beim Fahrzeugführer.

Aus der DE 33 46 630 ist eine Anzeigeneinrichtung insbesondere für Kraftfahrzeuge bekannt, bei der eine optimale Ausnutzung eines LED- oder LCD-Segmentblockes durch eine entsprechende Positionierung der selben erreicht wird. Dem oben genannten Problem kommt dies nicht erleichternd entgegen.

Aus der GB 22 46 010 A ist eine Displayeinheit für Fahrzeuge bekannt, die zur Beseitigung von Lichtreflexionen bzw. sogenannten Inflexionen innerhalb der Anzeige dient. Eine entsprechende Berücksichtigung der Sehschärfe des Fahrzeugführers auf kurze Entfernungen wird hier nicht Rechnung getragen.

Aus der FR 2727 559 A 1 ist eine Anordnung bzw. eine Anzeigeneinrichtung für Automobile bekannt, bei welcher eine Art kippbarer Spiegel zur Projektion nicht direkt einsehbarer Anzeigeninstrumente verwendet wird. Eine solche Einrichtung ist unpraktikabel, da die Anzeigeeinrichtung bzw. die sogenannte Armaturentafel in Kraftfahrzeugen grundsätzlich immer dem Fahrer zugewandt ist.

Aus der DE 44 47 368 A 1 ist eine Sichthilfe für ein Display bekannt. Weitergehende Ausführungen hierzu erfolgen noch im nachfolgenden Text.

Der Erfindung liegt somit die Aufgabe zugrunde, eine Anzeigeeinrichtung in Kraftfahrzeugen der gattungsgemäßen Art dahingehend weiter zu bilden, daß dieselbe auf unterschiedliche Fahrzeugführer adaptiert werden kann und darüber hinaus nicht weiter stört.

Bei einer Anzeigeneinrichtung der gattungsgemäßen Art ist die gestellte Aufgabe erfindungsgemäß durch die kennzeichnenden Merkmale des Patentanspruches 1 gelöst.

Weitergehende vorteilhafte Ausgestaltung der Erfindung sind in den übrigen Ansprüchen 2-7 angegeben.

Der Kerngedanke der Erfindung besteht darin, daß die durchsichtige Anzeigenabdeckung mindestens eine hinsichtlich der Brennweite einstellbare Linse enthält. Wichtig ist hierbei, daß die Linse eine für sich einstellbare Brennweite aufweist. Dabei soll sie in weitergehender erfindungsgemäßer Ausgestaltung so ausgebildet sein, daß die Einstellung der Brennweite der Linse mit elektrischen Mitteln erfolgt bzw. erfolgen kann.

Es ist darüber hinaus praktikabel, daß die Linse in die Anzeigenabdeckung integriert ist.

Eine weitere vorteilhafte Ausgestaltung der erfindungsgemäßen Anzeigeneinrichtung ist, daß mehrere personenbezogene Einstellungen in einem elektronischen Speichermedium abspeicherbar sind. Dies hat den außerordentlich Vorteil, daß die personenbezogene individuelle Brennweite eines jeden möglichen Fahrzeugführers der wiederholt das besagte Kraftfahrzeug bedient in demselben programmhaft abgespeichert werden kann. Dies ist dann nach entsprechender Fahreridentifikation durch eine entsprechende Nummer bei Inbetriebnahme anwählbar. Die Einstellung erfolgt sodann automatisch.

In weiterer vorteilhafter Ausgestaltung der Erfindung ist die Brennweite derart veränderbar, daß sie mit einer Dioptrinzahlen-Korrelation zwischen - 2,5 bis + 2,5 variierbar ist. Innerhalb dieses Bereiches sind ein Großteil aller Fehlsichtigkeiten, zumindest solche die für weitsichtige Kraftfahrzeugführer noch tollerabel sind, erfaßt. In weiterer vorteilhafter Ausgestaltung der Erfindung kann wie oben bereits gesagt eine Mehrzahl von Brennweiten personenbezogen abspeicherbar und auf entsprechende Betätigung abrufbar sein.

Eine weitere Ausführungsform welche von außerordentlich großen Vorteil ist, ist daß die jeweils personenbezogene Brennweite gemeinsam mit personenbezogenen Sitz- und/oder Spiegeleinstellungen abspeicherbar und durch entsprechende Betätigung gemeinsam abrufbar ist. Die schon vielfach verwendete Memorybetätigung von Sitzeinstellungen und Spiegeleinstellung wird nunmehr um die Einstellung der Brennweite der entsprechenden Linse erweitert.

Die Erfindung ist in der Zeichnung dargestellt und nachfolgend näher beschrieben.

Es zeigt:
- Figur 1:: schematische Draufsicht auf eine Anzeigetafel in Kraftfahrzeug.
- Figur 2:: funktionaler Zusammenhang der einzelnen Komponenten.

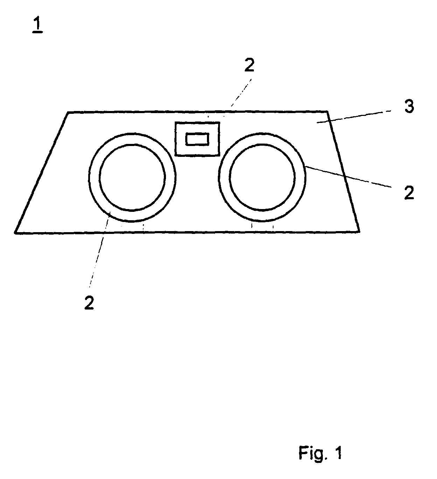

Figur 1 zeigt eine Anzeigeneinheit 1 innerhalb eines Kraftfahrzeuges. Die auf der Anzeigeneinheit 1 angeordneten Rundistrumente sind hierbei nur schematisch dargestellt. Im Bereich der Rundinstrumente bzw. auf der abzulesenden Skala ist dann die entsprechende Optik in Form einer Linse 2 vorgesehen. Diese ist in diesem Beispiel in die durchsichtige Abdeckung 3 mit eingearbeitet, daß heißt integriert. Die entsprechenden Betätigunskabel für die Linsen 2 werden dabei direkt an den gegenüberliegenden Rand der Abdeckung geführt und können ebenfalls in das durchsichtige Abdeckungsmaterial beispielsweise mit eingespritzt sein.

Die dabei verwendeten Linsen 2 können beispielsweise mit einem Piezoelement in Ringform oder dergleichen versehen sein, welches eine entsprechende Kontraktion auf den eigentlichen Linsenkörper ausführen uns so seine Brennweite ändern kann. Andere Möglichkeiten können durch Flüssigkristallinsen oder dergleichen bewerkstelligt werden. Hierbei ist die Linse sowohl für hier dargestellte Rundinstrumente als auch für eckige Digitalanzeigeinstrumente geeignet.

Darüber hinaus können natürlich jegliche Arten von Anzeigen analoger und digitaler Art mit einer solchen Linse ausgestattet sein.

Generell ist diese Vorgehensweise für gleichwelche Instrumentenbauform verwendbar. Aus der DE 44 47 368 A 1 ist zwar bereits eine Sichthilfe für ein Display bekannt, bei welchem eine einstellbare Linse zur Vergrößerung eingesetzt wird. Jedoch ist diese Art der Bauform nicht für den besagten Einsatzfall im Kraftfahrzeug verwendbar, weil sie zu aufwendig ist.

Insgesamt ergibt sich gegenüber dem gesamten beschriebenen Stand der Technik, daß die Linse hierbei kein starres Linsenelement sein soll. Darüber hinaus kann durch die integrierte Bauweise das Linsenelement auch nicht verloren gehen und muß auch bei jeweils anderen Fahrzeugführern nicht immer wieder ausgetauscht werden, sondern läßt eine automatische Einstellung auf Memoryabruf zu.

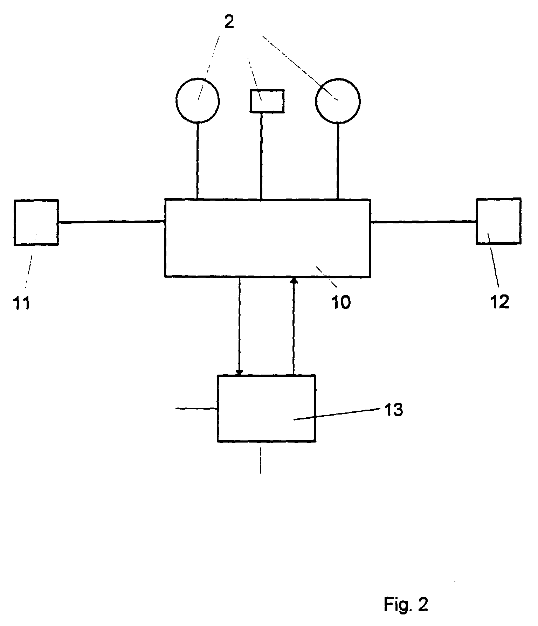

Figur 2 zeigt die prinzipielle Verschaltung der in Figur 1 dargestellten Linsen 2, von welchen hier 3 Linsen schematisch angedeutet sind. Dieselben sind hinsichtlich ihrer Betätigung der Brennweite mit einer Ansteuereinheit 10 verbunden. Die besagte Ansteuereinheit kann entweder automatisch ansteuern über eine automatische Ansteuerung 12 die auf Personenerkennung reagiert, oder aber sie kann durch eine manuelle Ansteuerung 11 bedienbar sein. Die Ansteuereinheit 10 steht dabei datenmäßig in einer bidirektionalen Verbindung mit einer Memoryeinheit 13. Diese enthält die Speichereinheit und kann darüber hinausgehend auch noch mit anderen Einstellelementen, Sensoren, wie Sitzposition, Spiegeleinstellung etc., verbunden sein.

Damit ist die erfindungsgemäße Anzeigeeinrichtung in den bereits in Kraftfahrzeugen vorgesehene Memorykreis auf sehr sinnvolle und zweckmäßige Art miteinbeziehbar.

## Patentansprüche

1. Anzeigeeinrichtung in Kraftfahrzeugen zur digitalen oder analogen Anzeige von betriebsbezogenen Daten, mit mindestens einer Anzeige und einer durchsichtigen Anzeigenabdeckung,
dadurch gekennzeichnet,
daß die durchsichtige Anzeigenabdeckung (3) mindestens eine hinsichtlich der Brennweite einstellbare Linse (2) enthält.

2. Anzeigeeinrichtung in Kraftfahrzeugen nach Anspruch 1,
dadurch gekennzeichnet,
daß die Einstellung der Brennweite über eine Beaufschlagung der Linse (2) mit elektrischen Mitteln erfolgt.

3. Anzeigeeinrichtung in Kraftfahrzeugen nach Anspruch 2,
dadurch gekennzeichnet,
daß mehrere personenbezogene Einstellungen in einem elektronischen Speichermedium (13) speicherbar sind.

4. Anzeigeeinrichtung in Kraftfahrzeugen nach einem oder mehreren der vorhergehenden Ansprüche,
dadurch gekennzeichnet,
daß die Brennweite derart veränderbar ist, daß sie auf Dioptrinzahlen zwischen -2,5 bis + 2,5 korrelierend variierbar ist.

5. Anzeigeeinrichtung in Kraftfahrzeugen nach einem oder mehreren der vorhergehenden Ansprüche,
dadurch gekennzeichnet,
daß eine Mehrzahl von Brennweiten personenbezogen abspeicherbar und auf entsprechende Betätigung abrufbar sind.

6. Anzeigeeinrichtung in Kraftfahrzeugen nach Anspruch 5,
dadurch gekennzeichnet,
daß die jeweils personenbezogene Brennweite gemeinsam mit personenbezogenen Sitz- und/oder Spiegeleinstellungen abspeicherbar und durch entsprechende Betätigung gemeinsam abrufbar ist.

7. Anzeigeeinrichtung in Kraftfahrzeugen nach einem oder mehreren der vorhergehenden Ansprüchen,
dadurch gekennzeichnet,
daß die Linse (2) in die Anzeigenabdeckung (3) integriert ist.

8. Anzeigeeinrichtung in Kraftfahrzeugen nach einem oder mehreren der vorhergehenden Ansprüchen,
dadurch gekennzeichnet,
daß die Linse (2) elektrisch betätigbar ist, wobei die Leitungen zur Betätigung dieser Mittel auf oder in die Anzeigenabdeckung (3) integriert sind.

9. Anzeigeeinrichtung in Kraftfahrzeugen nach einem oder mehreren der vorhergehenden Ansprüchen,
dadurch gekennzeichnet,
daß die Anzeigeneinrichtung digitaler oder analoger Art ist.
